# EUROPEAN PATENT SPECIFICATION

(11) **EP 4 160 883 B1**
(45) Date of publication and mention of the grant of the patent: **01.01.2025**
(21) Application number: 22190135.8
(22) Date of filing: 12.08.2022
(51) Int. Cl.: H02K 9/14, F24F 1/00, F04D 17/16, F04D 25/08, F04D 29/58, H02K 7/08, H02K 21/22, H02K 7/14

(54) **OUTER ROTOR MOTOR WITH INTEGRATED COOLING VENTILATOR**
AUSSENLÄUFERMOTOR MIT INTEGRIERTEM KÜHLGEBLÄSE
MOTEUR À ROTOR EXTÉRIEUR AVEC VENTILATEUR DE REFROIDISSEMENT INTÉGRÉ

(30) Priority: 29.09.2021 KR 20210128676
(43) Date of publication of application: 05.04.2023
(73) Proprietor: LG Electronics Inc., Seoul 07336 (KR)
(72) Inventor: SUNG, Changwoo, 06772 Seoul (KR); KIM, Kyunghwan, 06772 Seoul (KR); KIM, Minjung, 06772 Seoul (KR)
(74) Representative: Vossius & Partner Patentanwälte Rechtsanwälte mbB

(56) References cited:
- WO-A1-2020/202390
- KR-A- 20200 068 887
- US-A1- 2005 116 579
- US-A1- 2007 252 451

## Description

### CROSS-REFERENCE TO RELATED APPLICATION

This application claims priority to and the benefit of Korean Patent Application No. 10-2021-0128676 filed in the Korean Intellectual Property Office on September 29, 2021.

### BACKGROUND OF THE INVENTION

### Field of the Invention

The present disclosure relates to an outer rotor motor. In more detail, the present disclosure relates to an outer rotor motor for an air conditioner.

### Description of the Related Art

In general, an air conditioner is a device that creates a more comfortable indoor environment for users, and may control at least one of temperature, humidity, and cleanliness of air. For example, the indoor air is adjusted to a pleasantly clean state by adjusting a cool cooling state in summer and a warm heating state in winter, and adjusting the indoor humidity.

In detail, a refrigerant cycle is provided inside the air conditioner, and a phase-changed refrigerant and external air exchange heat through the refrigerant cycle. The refrigerant cycle includes a compressor that compresses refrigerant to high temperature and high pressure, a condenser in which the refrigerant passing through the compressor exchanges heat with outdoor air, an expander in which the refrigerant passing through the condenser expands to a low temperature and low pressure, and an evaporator in which the refrigerant passing through the expander exchanges heat with the indoor air. Here, when the air conditioner is used as a cooler, the condenser corresponds to an outdoor heat exchanger, and the evaporator corresponds to an indoor heat exchanger.

And, as is well known, the air conditioner may be roughly divided into a separate -type air conditioner in which an outdoor unit and an indoor unit are installed separately, and an integrated-type air conditioner in which the outdoor unit and the indoor unit are installed integrally, and may be divided into a small-capacity air conditioner and a large-capacity air conditioner according to the size of the capacity.

Recently, as large buildings such as large restaurants and hotels are built, the need for large air conditioners or multi-type air conditioners is increasing. The large air conditioner or multi-type air conditioner is equipped with an outer rotor motor.

In the outer rotor motor, a stator having a coil wound therein is installed, and a rotor is disposed on the outside of the stator as if a magnet surrounds the coil of the stator. That is, the outer rotor motor is mainly used in large-capacity air conditioners because the inertia is significantly increased because the rotor is disposed on the outside of the outer rotor motor to rotate due to the structure of the outer rotor motor.

The outer rotor motor uses a cooling wheel, a cooling fan, and a flow guide for heat dissipation, so the number of parts is large. Accordingly, there is a problem in that the fastening structure of the parts is complicated and the size of the outer rotor motor is increased.

US 2007/252451 A1 relates to a motor having a heat-dissipating structure for a circuit component mounted on a circuit board, and a fan unit including the motor.

### [Prior technical literature]

**(Patent Document 1)** Korean Patent Publication No. 10-2020-0068887 A (published on June 16, 2020)

### SUMMARY OF THE INVENTION

The problem to be solved by the present disclosure is to provide an outer rotor motor capable of reducing the number of unnecessary parts.

In addition, the problem to be solved by the present disclosure is to provide an outer rotor motor capable of reducing the size of the product by simplifying the fastening structure of the parts.

An outer rotor motor according to the present disclosure is defined in claim 1. Preferred embodiments are specified in the dependent claims.

In this case, the cover includes a fan bracket and a plurality of blades, both the fan bracket and the plurality of blades projecting in a radial direction from a radially outer surface, and a plurality of blades extending in an axial direction from the radially outer surface.

Through this, it is possible to increase the heat dissipation effect without a configuration such as a cooling wheel, a cooling fan and a flow guide, so it is possible to reduce the number of parts. In addition, it is possible to reduce the size of the product by simplifying the fastening structure of the parts.

In addition, a radial height of the plurality of blades may decrease as the plurality of blades are adjacent to the flange portion.

In addition, the plurality of blades may extend rearward from an axial rear surface of the fan bracket.

In addition, the plurality of blades may extend to a region adjacent to a rear end of the cover.

In addition, the plurality of blades may be disposed inside in the radial direction than the radially outer surface of the fan bracket.

In addition, the radially outer surface of the plurality of blades may be formed to be convex outwardly.

In addition, the radially outer surface of the plurality of blades may be formed to be concave inwardly.

In addition, the rotating shaft may be rotatably bearing-coupled to a radially central region of the frame.

In addition, the fan bracket may be disposed axially forward than an axially central region of the rotating shaft.

An outer rotor motor according to an aspect of the present disclosure for achieving the above object may comprise a frame including a coupling portion extending in an axial direction and a flange portion extending in a radial direction in a rear region of the coupling portion, a stator disposed on an outer circumferential surface of the coupling portion, a coil disposed on the stator, a rotating shaft rotatably coupled to an inside of the coupling portion, a cover coupled to the rotating shaft and surrounding the stator, and a magnet disposed on the cover and facing the stator.

In this case, the cover may include a fan bracket projecting in a radial direction from a radially outer surface, and a plurality of blades formed between a rear surface of the fan bracket and the radially outer surface of the cover.

Through this, it is possible to increase the heat dissipation effect without a configuration such as a cooling wheel, a cooling fan and a flow guide, so it is possible to reduce the number of parts. In addition, it is possible to reduce the size of the product by simplifying the fastening structure of the parts.

In addition, a radial height of the plurality of blades may decrease as the plurality of blades move away from the rear surface of the fan bracket.

In addition, the plurality of blades may be disposed inside in the radial direction than the radially outer surface of the fan bracket.

In addition, the radially outer surface of the plurality of blades may be formed to be convex outwardly.

In addition, the radially outer surface of the plurality of blades may be formed to be concave inwardly.

In this case, the cover may include a fan bracket projecting in a radial direction from a radially outer surface, and a plurality of protrusions extending in an axial direction from the radially outer surface.

Through this, it is possible to increase the heat dissipation effect without a configuration such as a cooling wheel, a cooling fan and a flow guide, so it is possible to reduce the number of parts. In addition, it is possible to reduce the size of the product by simplifying the fastening structure of the parts.

In addition, a cross-sectional area of the plurality of protrusions may decrease as at least some of the plurality of protrusions go outward in the radial direction.

In addition, the plurality of protrusions may be in contact with adjacent protrusions each other.

In addition, the cross-sectional area of the plurality of protrusions may decrease as the plurality of protrusions go outward in the radial direction in a region in contact with the adjacent protrusions.

In addition, a length in a circumferential direction of the plurality of protrusions may be twice a height of a region in which the cross-sectional area of the plurality of protrusions decreases as the plurality of projections go outward in the radial direction.

Through the present disclosure, it is possible to provide an outer rotor motor capable of reducing the number of unnecessary parts.

In addition, through the present disclosure, it is possible to provide an outer rotor motor capable of reducing the size of the product by simplifying the fastening structure of the parts.

### BRIEF DESCRIPTION OF THE DRAWINGS

FIG. 1 is a perspective view of an outer rotor motor according to an embodiment of the present disclosure.
FIG. 2 is a cross-sectional view of an outer rotor motor according to an embodiment of the present disclosure.
FIG. 3 is a perspective view of a cover of an outer rotor motor according to an embodiment of the present disclosure.
FIGS. 4 to 7 are modified examples of a cover of an outer rotor motor according to an embodiment of the present disclosure.
FIG. 8 is a cross-sectional view of a partial area of a cover of an outer rotor motor according to FIG. 7.
FIG. 9 is a diagram illustrating a fluid flow of an outer rotor motor according to the prior art.
FIGS. 10 and 11 are diagrams illustrating a fluid flow of an outer rotor motor according to an embodiment of the present disclosure.

### DETAILED DESCRIPTION OF THE EMBODIMENTS

Hereinafter, embodiments disclosed in the present disclosure will be described in detail with reference to the accompanying drawings, however, regardless of the reference numerals, the same or similar components will be given the same reference numerals and redundant description thereof will be omitted.

In describing the embodiments disclosed in the present disclosure, when a component is referred to as being "connected" or "accessed" to other component, it may be directly connected or accessed to the other component, however, it may be understood that other components may be present in the middle.

In addition, in describing the embodiments disclosed in the present disclosure, when it is determined that the detailed description of the related known technology may obscure the subject matter of the embodiments disclosed in the present disclosure, the detailed description thereof will be omitted. In addition, the accompanying drawings are only for easily understanding the embodiments disclosed in the present disclosure, the scope of the invention being solely defined by the appended claims.

On the other hand, terms of disclosure may be replaced with terms such as document, specification, description.

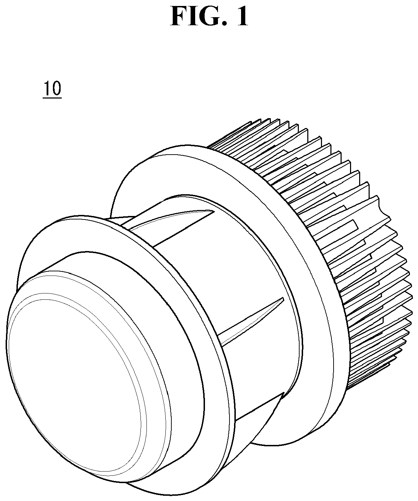

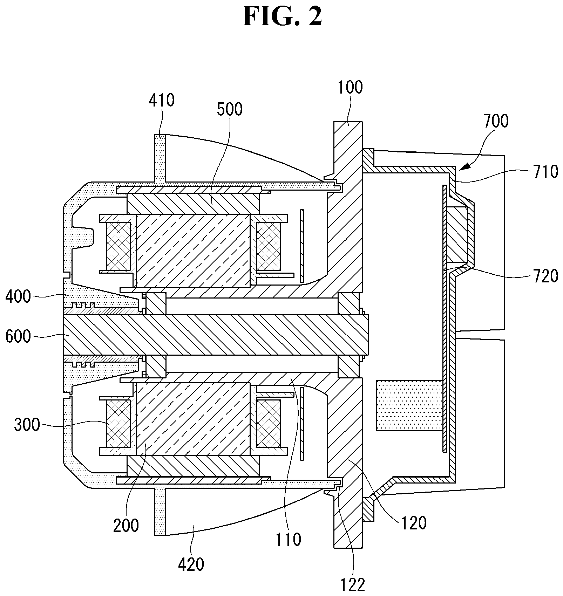

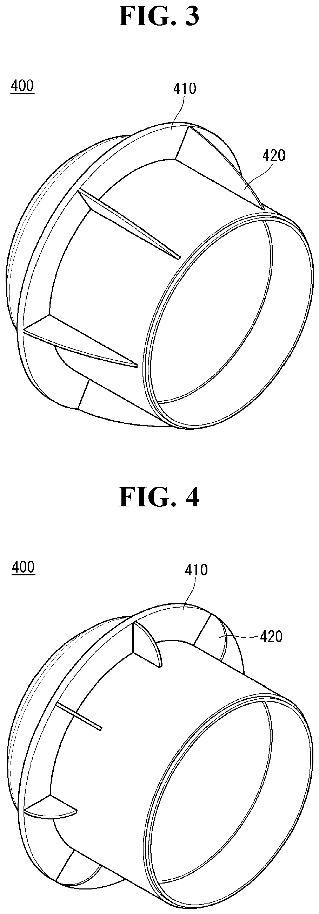

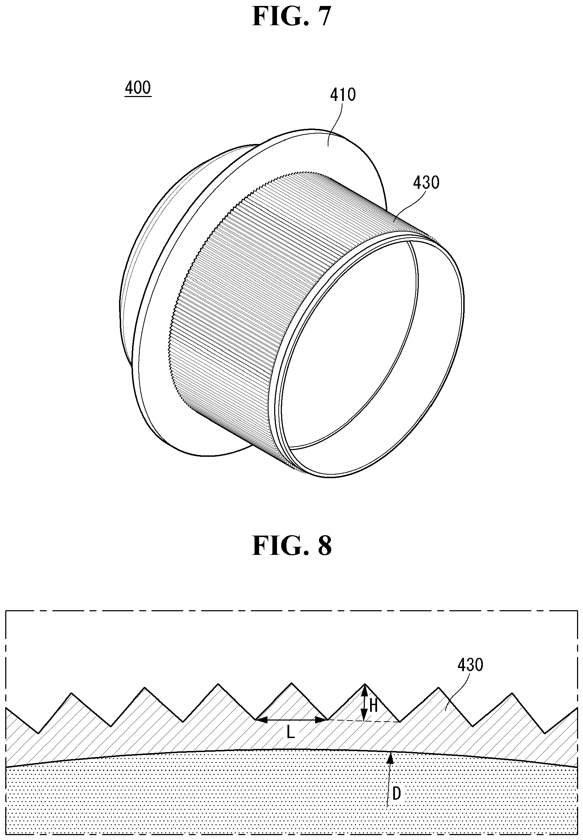

FIG. 1 is a perspective view of an outer rotor motor according to an embodiment of the present disclosure. FIG. 2 is a cross-sectional view of an outer rotor motor according to an embodiment of the present disclosure. FIG. 3 is a perspective view of a cover of an outer rotor motor according to an embodiment of the present disclosure. FIGS. 4 to 7 are modified examples of a cover of an outer rotor motor according to an embodiment of the present disclosure. FIG. 8 is a cross-sectional view of a partial area of a cover of an outer rotor motor according to FIG. 7.

Referring to FIGS. 1 to 3, an outer rotor motor 10 according to an embodiment of the present disclosure may include a frame 100, a stator 200, a coil 300, a cover 400, a magnet 500, and a rotating shaft 600, and a controller 700, but may be implemented except for some of the configurations, and does not exclude additional configurations.

In one embodiment of the present disclosure, it may be understood that the left side refers to a front in an axial direction and the right side refers to a rear in the axial direction with reference to FIG. 2, and the axial direction may be understood to mean a left-right direction in which the rotating shaft 600 extends with reference to FIG. 2.

The frame 100 may be disposed at the rear of the cover 400. The stator 200, the coil 300, the magnet 500, and the rotating shaft 600 may be disposed between the frame 100 and the cover 400. The controller 700 may be coupled to the rear surface of the frame 100.

The frame 100 includes a coupling portion 110. The coupling portion 110 extends in the axial direction. The coupling portion 110 may include a long hole formed in the central region and extending in the axial direction. The rotating shaft 600 may be disposed in the long hole of the coupling portion 110. The rotating shaft 600 is rotatably coupled to the coupling portion 110. The rotating shaft 600 is bearing-coupled to the coupling portion 110.

The frame 100 may include a flange portion 120. The flange portion 120 may extend in a radial direction from the rear of the coupling portion 110. The controller 700 may be coupled to the rear surface of the flange portion 120. The cover 400 may be disposed in front of the flange portion 120. The flange portion 120 may include a groove 122 in which a rear end of the cover 400 is disposed. Through this, it is possible to prevent the cover 400 from being separated to the outside by rotation.

The stator 200 may be disposed on the frame 100. The stator 200 may be disposed on the coupling portion 110 of the frame 100. The stator 200 may be disposed on an outer circumferential surface of the coupling portion 110 of the frame 100. The stator 200 may be formed in a cylindrical shape. Alternatively, the stator 200 may be formed of a plurality of stator units spaced apart in a circumferential direction. The stator 200 may face the magnet 500. The stator 200 may be disposed inside the magnet 500. The stator 200 may be spaced apart from the magnet 500 by a predetermined distance. The stator 200 may be fixed to the coupling portion 110 of the frame 100.

The coil 300 may be disposed on the stator 200. The coil 300 may be wound around the stator 200. The coil 300 may be electrically connected to the controller 700.

The cover 400 may be formed in a shape in which the rear surface is opened. The cover 400 is coupled to the rotating shaft 600. The central region of the front surface of the cover 400 may be penetrated by the rotating shaft 600. The rotating shaft 600 may be coupled to the central region of the front surface of the cover 400. The cover 400 may surround the stator 200 and the coil 300. The side surface of the cover 400 may surround the stator 200 and the coil 300. The magnet 500 is disposed on the cover 400. The magnet 500 may be coupled to the inside of the side surface of the cover 400. The rear end of the cover 400 may be disposed in the groove 122 of the flange portion 120 of the frame 100. The rear end of the side surface of the cover 400 may be disposed in the groove 122 of the flange portion 120 of the frame 100.

The cover 400 may include a fan bracket 410. The fan bracket 410 may extend in the radial direction from an outer circumferential surface of the cover 400. The fan bracket 410 may extend in the radial direction from the outside of the side surface of the cover 400. Although the fan bracket 410 is described as an example formed integrally with the cover 400, it may be made of a separate member and coupled to the cover 400. The fan bracket 410 may be coupled to a fan 20 disposed in front of the outer rotor motor 10. The fan bracket 410 may be disposed axially forward than an axially central region of the rotating shaft 600. The fan bracket 410 may be disposed axially forward than an axially central region of the stator 200.

The cover 400 may include a plurality of blades 420. The plurality of blades 420 may be formed on the outer circumferential surface of the cover 400. The plurality of blades 420 may be formed on an outer surface of the side surface of the cover 400. The plurality of blades 420 may extend in the radial direction from the outer circumferential surface of the cover 400. The plurality of blades 420 may extend in the radial direction from the outer surface of the side surface of the cover 400. The plurality of blades 420 may extend in the axial direction. The plurality of blades 420 may extend in the axial direction from the outer circumferential surface of the cover 400. The plurality of blades 420 may extend in the axial direction from the outer surface of the side surface of the cover 400. The plurality of blades 420 may be spaced apart from each other in the circumferential direction.

The plurality of blades 420 may be disposed between the fan bracket 410 and the flange portion 120 of the frame 100. Front regions of the plurality of blades 420 may be disposed on the rear surface of the fan bracket 410. The plurality of blades 420 may extend rearward from the rear surface of the fan bracket 410. At least a portion of the plurality of blades 420 may be disposed inside in the radial direction than the radially outer surface of the fan bracket 410. The plurality of blades 420 may be axially spaced apart from the flange portion 120 of the frame 100. The plurality of blades 420 may extend to a region adjacent to the rear end of the cover 400.

Through this, when the cover 400 rotates in the circumferential direction, the plurality of blades 420 generates a flow of fluid between the fan bracket 410 and the flange portion 120 of the frame 100. That is, it is possible to improve the heat dissipation performance of the cover 400 and inner parts of the cover 400 by convection.

Specifically, since the flow of fluid occurs between the fan bracket 410 and the flange portion 120 of the frame 100, it is possible to improve the heat dissipation performance of the inner parts of the cover 400 through the space between the cover 400 and the flange portion 120 of the frame 100. Since it is possible to increase the heat dissipation effect without a separate configuration such as a cooling wheel, a cooling fan and a flow guide, it is possible to reduce the number of parts of the outer rotor motor 10. In addition, it is possible to reduce the size of the outer rotor motor 10 by simplifying the fastening structure of the parts.

A radial height of the plurality of blades 420 decreases as the plurality of blades move away from the fan bracket 410. The radial height of the plurality of blades 420 decreases as the plurality of blades are adjacent to the flange portion 120 of the frame 100. The radially outer surface of the plurality of blades 420 may be formed to be convex outwardly. The heat dissipation performance may be improved by increasing the flow of fluid between the fan bracket 410 and the flange portion 120 by forming the radially outer surfaces of the plurality of blades 420 to be formed to be convex toward the outer surface compared to the radially outer surface of the plurality of blades 420 formed in a straight shape.

The magnet 500 is disposed on the cover 400. The magnet 500 is disposed on the inner surface of the cover 400. The magnet 500 faces the stator 200. The magnet 500 may be disposed to surround the stator 200. The magnet 500 may rotate the cover 400, the rotating shaft 600, and the fan 20 in the circumferential direction through electromagnetic interaction with an electric field generated in the stator 200 due to the coil 300.

The rotating shaft 600 may be rotatably coupled to the frame 100. The rotating shaft may be rotatably coupled to a radially central region of the frame 100. The rotating shaft 600 is rotatably coupled to the coupling part 110 of the frame 100. The rotating shaft 600 is bearing-coupled to the coupling portion 110 of the frame 100.

The rotating shaft 600 may be coupled to the fan 20. The front region of the rotating shaft 600 may be coupled to the fan 200. The rotating shaft 600 may pass through the cover 400. The rotating shaft 600 may pass through the central region of the front surface of the cover 400. The rotating shaft 600 may be coupled to the front surface of the cover 400. Through this, the rotating shaft 600 may rotate integrally with the cover 400.

The controller 700 may be coupled to the frame 100. The controller 700 may be electrically connected to the coil 300. The controller 700 may be coupled to the rear surface of the flange portion 120 of the frame 100. The controller 700 may include a coupling member 710 coupled to the rear surface of the flange portion 120 of the frame 100 and a substrate 720 disposed on the coupling member 710 and electrically connected to the coil 300. The substrate 720 may be a printed circuit board (PCB). A heat sink capable of dissipating heat generated by the controller 700 may be installed on the rear surface of the controller 700.

Referring to FIG. 4, the plurality of blades 420 may be formed between the rear surface of the fan bracket 410 and the radially outer surface or the outer circumferential surface of the cover 400. Specifically, the plurality of blades 420 may be in contact with the rear surface of the fan bracket 410 and may be in contact with the radially outer surface or the outer circumferential surface of the cover 400. The cross-sections of the plurality of blades 420 may have a partial shape of a circle or an ellipse. The cross-section of the plurality of blades 420 may have an arc shape. The plurality of blades 420 may be spaced apart from each other in the circumferential direction. The radial height of the plurality of blades decreases as the plurality of blades move away from the rear surface of the fan bracket. At least a portion of the plurality of blades 420 may be disposed inside in the radial direction than the radially outer surface of the fan bracket 410. The radially outer surface of the plurality of blades may be formed to be convex outwardly.

The plurality of blades 420 according to FIG. 4 may be formed to have a shorter axial length than the plurality of blades 420 according to FIG. 3. Although the heat dissipation performance is somewhat lower than that of the plurality of blades 420 according to FIG. 3, it is possible to reduce the decrease in output of the outer rotor motor 10 while improving manufacturing easiness. For example, in the plurality of blades 420 according to FIG. 4, the flow resistance of the fluid around the cover 400 is reduced compared to the plurality of blades 420 according to FIG. 3, so there is an advantage in that the output loss of the outer rotor motor 10 is reduced.

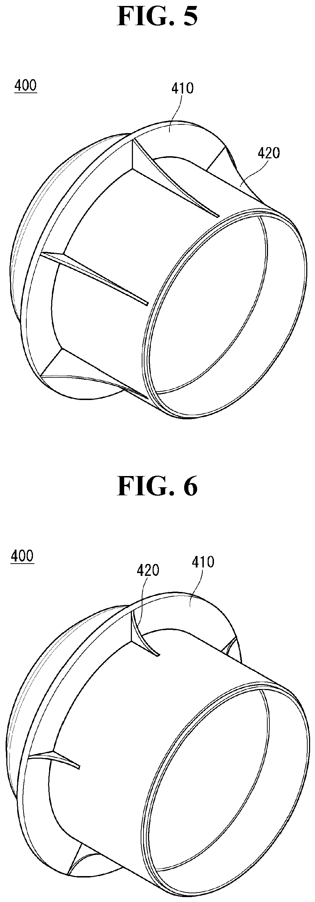

Referring to FIG. 5, the radially outer surfaces of the plurality of blades 420 may be formed to be concave inwardly. That is, it can be understood that the radially outer surfaces of the plurality of blades 420 according to FIG. 5 are formed to be concave inwardly in the radial direction compared to the plurality of blades 420 according to FIG. 3. In this case, the heat dissipation performance is somewhat lower than that of the plurality of blades 420 according to FIG. 3, but there is an advantage of reducing the decrease in the output of the outer rotor motor 10. For example, in the plurality of blades 420 according to FIG. 5, the flow resistance of the fluid around the cover 400 is reduced compared to the plurality of blades 420 according to FIG. 3, so there is an advantage in that the output loss of the outer rotor motor 10 is reduced.

Referring to FIG. 6, the radially outer surfaces of the plurality of blades 420 may be formed to be concave inwardly. That is, it can be understood that the radially outer surfaces of the plurality of blades 420 according to FIG. 6 are formed to be concave inwardly in the radial direction compared to the plurality of blades 420 according to FIG. 4. In this case, the heat dissipation performance is somewhat lower than that of the plurality of blades 420 according to FIG. 4, but there is an advantage of reducing the decrease in the output of the outer rotor motor 10. For example, in the plurality of blades 420 according to FIG. 6, the flow resistance of the fluid around the cover 400 is reduced compared to the plurality of blades 420 according to FIG. 4, so there is an advantage in that the output loss of the outer rotor motor 10 is reduced.

Referring to FIGS. 7 and 8, the cover 400 may include a plurality of protrusions 430 extending in the axial direction from the radially outer surface or the outer circumferential surface of the cover 400. The plurality of protrusions 430 may be in contact with adjacent protrusions each other. The plurality of protrusions 430 may extend from the rear surface of the fan bracket 410 to a region adjacent to the flange portion 120 of the frame 100. A cross-sectional area of the plurality of protrusions 430 may decrease as at least some of the plurality of protrusions 430 go outward in the radial direction. Specifically, the cross-sectional area of the plurality of protrusions 430 may decrease as the plurality of protrusions 430 go outward in the radial direction from a region in contact with the adjacent protrusions.

The plurality of protrusions 430 has the advantage of reducing loss resistance because the flow resistance of the surrounding fluid is reduced due to the shape of the plurality of protrusions 430 compared to the plurality of blades 420.

A length L in the circumferential direction of the plurality of projections 430 may be twice a height H of a region in which the cross-sectional area of the plurality of projections 430 decreases toward the outside in the radial direction. In this case, compared to the plurality of protrusions 430 having the same cooling performance, it is possible to reduce the output loss of the outer rotor motor 10 by about 1/3.

In one embodiment of the present disclosure, the plurality of protrusions 430 have been described as being in contact with each other, but otherwise, the plurality of protrusions 430 may be spaced apart from each other in the circumferential direction. In this case, the adjacent protrusions may be disposed adjacent to each other in the circumferential direction. In this case, the heat dissipation performance can be further improved.

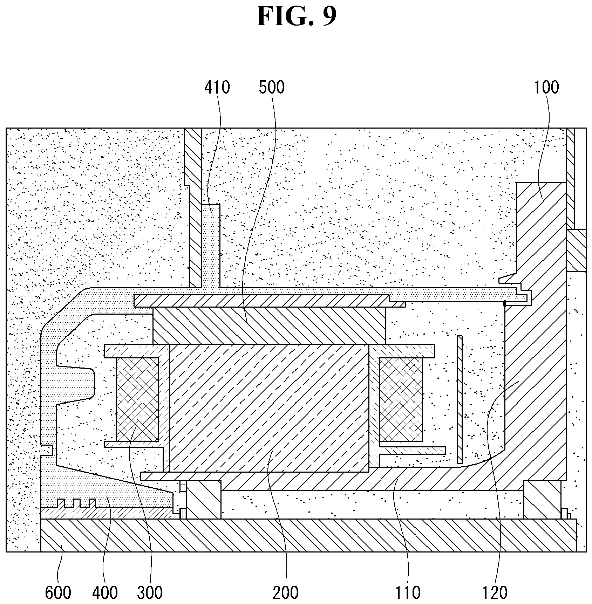

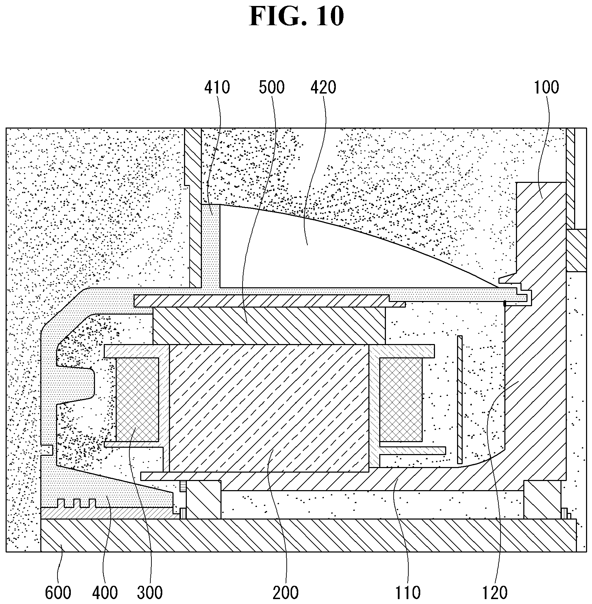

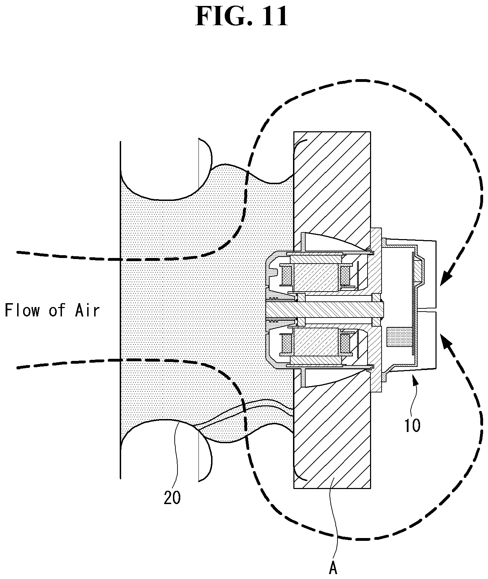

FIG. 9 is a diagram illustrating a fluid flow of an outer rotor motor according to the prior art. FIGS. 10 and 11 are diagrams illustrating a fluid flow of an outer rotor motor according to an embodiment of the present disclosure.

Referring to FIG. 9, in the case of the outer rotor motor according to the prior art, the flow of fluid hardly occurs between the fan bracket 410 and the frame 100.

Referring to FIGS. 10 and 11, it can be seen that in the case of the outer rotor motor 10 according to an embodiment of the present disclosure, the fluid flow occurs more smoothly between the fan bracket 410 and the frame 100 compared to the prior art. That is, the outer rotor motor 10 according to an embodiment of the present disclosure may improve the heat dissipation performance of the cover 400 and the inner parts of the cover 400 by convection.

Specifically, since the flow of fluid occurs between the fan bracket 410 and the flange portion 120 of the frame 100, it is possible to improve the heat dissipation performance of the inner parts of the cover 400 through the space between the cover 400 and the flange portion 120 of the frame 100. Since the outer rotor motor 10 according to an embodiment of the present disclosure can increase the heat dissipation effect without a separate configuration such as a cooling wheel, a cooling fan and a flow guide, it is possible to reduce the number of parts of the outer rotor motor 10. In addition, it is possible to reduce the size of the outer rotor motor 10 by simplifying the fastening structure of the parts.

The present invention is not limited to the described embodiments. Alterations and/or modifications of the described embodiments are contemplated as being alternative forms of the invention as far as they do not depart from the scope of the invention, which is defined by the appended claims.

## Claims

1. An outer rotor motor comprising:
a frame (100) including a coupling portion (110) extending in an axial direction and a flange portion (120) extending in a radial direction in a rear region of the coupling portion (110);
a stator (200) disposed on a radially outer surface of the coupling portion (110);
a coil (300) disposed on the stator (200);
a rotating shaft (600) rotatably bearing-coupled to a radially central region of the coupling portion (110);
a cylindrical cover (400) coupled to the rotating shaft (600) in a forward region of the coupling portion (110) and surrounding the stator (200); and
a magnet (500) disposed on the cover (400), coupled to the inside of a side surface of the cover (400), and facing the stator (200),
wherein the cover (400) includes a fan bracket (410) and a plurality of blades (420), both the fan bracket (410) and the plurality of blades (420) projecting in a radial direction from a radially outer surface of the cover (400), and the plurality of blades (420) extending in the axial direction between the fan bracket (410) and the flange portion (120) in order to generate a flow of fluid between the fan bracket (410) and the flange portion (120) for improving the heat dissipation performance of the cover (400) and inner parts of the cover (400).

2. The outer rotor motor of claim 1, wherein a radial height of the plurality of blades (420) decreases as the plurality of blades are adjacent to the flange portion (120).

3. The outer rotor motor of claim 1 or 2, wherein the plurality of blades (420) extend rearward from an axial rear surface of the fan bracket (410).

4. The outer rotor motor of claim 3, wherein the plurality of blades (420) extend to a region adjacent to a rear end of the cover (400).

5. The outer rotor motor of any one of claims 1 to 4, wherein the plurality of blades (420) do not extend in the radial direction more than the radially outer surface of the fan bracket (410).

6. The outer rotor motor of any one of claims 1 to 5, wherein the radially outer surface of the plurality of blades (420) is formed to be convex outwardly.

7. The outer rotor motor of any one of claims 1 to 5, wherein the radially outer surface of the plurality of blades (420) is formed to be concave inwardly.

8. The outer rotor motor of any one of claims 1 to 7, wherein the rotating shaft (600) is rotatably bearing-coupled to a radially central region of the frame (100).

9. The outer rotor motor of any one of claims 1 to 7, wherein the fan bracket (410) is disposed axially more forward than an axially central region of the rotating shaft (600).

## Patentansprüche

1. Außenläufermotor, der aufweist:
einen Rahmen (100), der einen Kopplungsabschnitt (110), der sich in einer axialen Richtung erstreckt, und einen Flanschabschnitt (120) aufweist, der sich in einer radialen Richtung in einem hinteren Bereich des Kopplungsabschnitts (110) erstreckt;
einen Stator (200), der auf einer radial äußeren Oberfläche des Kopplungsabschnitts (110) angeordnet ist;
eine Spule (300), die auf dem Stator (200) angeordnet ist;
eine Drehwelle (600), die drehbar mit einem radial mittigen Bereich des Kopplungsabschnitts (110) lagergekoppelt ist;
eine zylindrische Abdeckung (400), die mit der Drehwelle (600) in einem vorderen Bereich des Kopplungsabschnitts (110) gekoppelt ist und den Stator (200) umgibt; und
einen Magneten (500), der auf der Abdeckung (400) angeordnet ist, mit der Innenseite einer Seitenfläche der Abdeckung (400) gekoppelt ist und dem Stator (200) zugewandt ist,
wobei die Abdeckung (400) eine Lüfterhalterung (410) und mehrere Flügel (420) umfasst, wobei sowohl die Lüfterhalterung (410) als auch die mehreren Flügel (420) in einer radialen Richtung von einer radial äußeren Oberfläche der Abdeckung (400) vorstehen und sich die mehreren Flügel (420) in axialer Richtung zwischen der Lüfterhalterung (410) und dem Flanschabschnitt (120) erstrecken, um einen Fluidstrom zwischen der Lüfterhalterung (410) und dem Flanschabschnitt (120) zu erzeugen, um die Wärmeableitungsleistung der Abdeckung (400) und der inneren Teile der Abdeckung (400) zu verbessern.

2. Außenläufermotor nach Anspruch 1, wobei eine radiale Höhe der mehreren Flügel (420) abnimmt, je benachbarter die mehreren Flügel zum Flanschabschnitt (120) sind.

3. Außenläufermotor nach Anspruch 1 oder 2, wobei sich die mehreren Flügel (420) von einer axialen hinteren Fläche der Lüfterhalterung (410) nach hinten erstrecken.

4. Außenläufermotor nach Anspruch 3, wobei sich die mehreren Flügel (420) bis zu einem Bereich erstrecken, der zu einem hinteren Ende der Abdeckung (400) benachbart ist.

5. Außenläufermotor nach einem der Ansprüche 1 bis 4, wobei sich die mehreren Flügel (420) nicht weiter in radialer Richtung erstrecken als die radial äußere Oberfläche der Lüfterhalterung (410).

6. Außenläufermotor nach einem der Ansprüche 1 bis 5, wobei die radial äußere Oberfläche der mehreren Flügel (420) so geformt ist, dass sie nach außen konvex ist.

7. Außenläufermotor nach einem der Ansprüche 1 bis 5, wobei die radial äußere Oberfläche der mehreren Flügel (420) so geformt ist, dass sie nach innen konkav ist.

8. Außenläufermotor nach einem der Ansprüche 1 bis 7, wobei die Drehwelle (600) drehbar mit einem radial mittigen Bereich des Rahmens (100) lagergekoppelt ist.

9. Außenläufermotor nach einem der Ansprüche 1 bis 7, wobei die Lüfterhalterung (410) axial weiter vorne angeordnet ist als ein axial mittiger Bereich der Drehwelle (600).

## Revendications

1. Moteur à rotor externe, comprenant :
un bâti (100) présentant une partie d'accouplement (110) s'étendant dans la direction axiale et une partie de bride (120) s'étendant dans la direction radiale dans une zone arrière de la partie d'accouplement (110) ;
un stator (200) disposé sur une surface radialement extérieure de la partie d'accouplement (110) ;
une bobine (300) disposée sur le stator (200) ;
un arbre rotatif (600) raccordé de manière rotative par palier à une zone radialement centrale de la partie d'accouplement (110) ;
un couvercle cylindrique (400) raccordé à l'arbre rotatif (600) dans une zone avant de la partie d'accouplement (110) et entourant le stator (200) ; et
un aimant (500) disposé sur le couvercle (400), raccordé à l'intérieur d'une surface latérale du couvercle (400) et faisant face au stator (200),
où le couvercle (400) comprend un support de ventilateur (410) et une pluralité de pales (420), le support de ventilateur (410) et la pluralité de pales (420) faisant saillie dans la direction radiale depuis une surface radialement extérieure du couvercle (400), et la pluralité de pales (420) s'étendant dans la direction axiale entre le support de ventilateur (410) et la partie de bride (120) de manière à générer un courant de fluide entre le support de ventilateur (410) et la partie de bride (120) afin d'améliorer la performance de dissipation de chaleur du couvercle (400) et des parties intérieures du couvercle (400).

2. Moteur à rotor externe selon la revendication 1, où la hauteur radiale de la pluralité de pales (420) diminue lorsque la pluralité de pales devient adjacente à la partie de bride (120).

3. Moteur à rotor externe selon la revendication 1 ou la revendication 2, où la pluralité de pales (420) s'étend vers l'arrière depuis une surface arrière axiale du support de ventilateur (410).

4. Moteur à rotor externe selon la revendication 3, où la pluralité de pales (420) s'étend vers une zone adjacente à une extrémité arrière du couvercle (400).

5. Moteur à rotor externe selon l'une des revendications 1 à 4, où la pluralité de pales (420) ne s'étend pas plus loin dans la direction radiale que la surface radialement extérieure du support de ventilateur (410).

6. Moteur à rotor externe selon l'une des revendications 1 à 5, où la surface radialement extérieure de la pluralité de pales (420) est formée de manière à être convexe vers l' extérieur.

7. Moteur à rotor externe selon l'une des revendications 1 à 5, où la surface radialement extérieure de la pluralité de pales (420) est formée de manière à être concave vers l'intérieur.

8. Moteur à rotor externe selon l'une des revendications 1 à 7, où l'arbre rotatif (600) est raccordé de manière rotative à une zone radialement centrale du bâti (100).

9. Moteur à rotor externe selon l'une des revendications 1 à 7, où le support de ventilateur (410) est disposé axialement plus en avant qu'une zone axialement centrale de l'arbre rotatif (600).
